# EUROPÄISCHE PATENTANMELDUNG

(11) **EP 1 843 281 A1**
(43) Veröffentlichungstag der Anmeldung: **10.10.2007**
(21) Anmeldenummer: 07105330.0
(22) Anmeldetag: 30.03.2007
(51) Int. Cl.: G06K 19/077

(54) **Datenträger-/Sendevorrichtung und Verfahren zur Herstellung einer Datenträger-/Sendevorrichtung**

(30) Priorität: 07.04.2006 DE 102006017992
(71) Anmelder: BALLUFF GmbH, 73765 Neuhausen (DE)
(72) Erfinder: Reuker, Dieter, 70619 Stuttgart (DE)
(74) Vertreter: Hoeger, Stellrecht & Partner Patentanwälte

(57) **Zusammenfassung**

Es wird eine Datenträger-/Sendevorrichtung (10) zur Fixierung an einem Objekt, umfassend einen Schwingkreis mit mindestens einer Spule, eine elektrische Schaltungsanordnung, an welche die mindestens eine Spule (38) gekoppelt ist, und eine Fixierungseinrichtung (12) mit einer Anlageseite an das Objekt, vorgeschlagen, bei der die Spulenachse (60) der mindestens einen Spule (38) mindestens näherungsweise parallel zu der Anlageseite der Fixierungseinrichtung ist.

## Beschreibung

Die Erfindung betrifft eine Datenträger-/Sendevorrichtung zur Fixierung an einem Objekt, umfassend einen Schwingkreis mit mindestens einer Spule, eine elektrische Schaltungsanordnung, an welche die mindestens eine Spule gekoppelt ist, und eine Fixierungseinrichtung mit einer Anlageseite an das Objekt.

Die Erfindung betrifft ferner ein Verfahren zur Herstellung einer Datenträger-/Sendevorrichtung mit einem Schwingkreis.

Datenträgervorrichtungen werden eingesetzt, um beispielsweise Objekte zu identifizieren. Die Datenträgervorrichtung umfasst einen Schwingkreis, mittels welchem ein Transponder gebildet ist, über den Daten berührungslos und ohne Sichtkontakt gelesen und auch gespeichert werden können. Über eine Sende-Empfangs-Einheit, welche eine Sendevorrichtung umfasst, können gespeicherte Daten automatisch und schnell identifiziert werden.

Aus der Produktionsinformation "((rfid))-onMetal-Label" der Schreiner Logi-Data GmbH & Co. KG, Waldvoegeleinstrasse 12, 80995 München, www.schreiner-online.com ist ein rfid-Label bekannt, welches direkt auf metallische Oberflächen fixierbar ist und Lese- und Schreib-Möglichkeiten innerhalb eines Abstandsbereichs bereitstellt.

Aus der EP 0 590 589 B1 ist eine Transponder-Baueinheit zur Verwendung mit einem Erkennungs- und Identifizierungssystem bekannt, die an einem metallischen Gegenstand angebracht werden kann, ohne verstimmt zu werden. Diese umfasst ein Abschirmelement, das aus einem Nichteisenmaterial gebildet ist, ein isolierendes Trägerelement, das an dem Abschirmelement angebracht ist, und einen Transponder, der eine am Trägerelement angebrachte Antenne besitzt, die mit einer Tank-Schaltung verbunden ist. Der Transponder ist vom Abschirmelement elektrisch isoliert, während das Abschirmelement noch immer mit der Tank-Schaltung in Wechselwirkung ist, so dass die Kombination aus der Tank-Schaltung, der Antenne und der Abschirmung als eine einzelne Einheit auf eine ausgewählte Betriebsfrequenz abgestimmt ist.

Aus der WO 2004/066438 A1 ist ein Antennenkern von wenigstens 80 mm Länge mit wenigstens einem biegsamen weichmagnetischen Element aus einer amorphen oder nanokristallinen Legierung bekannt, bei dem die amorphe oder nanokristalline Legierung einen Magnetstriktionswert im Bereich von 4 × 10⁻⁶ bis -4 × 10⁻⁶ aufweist.

Aus der EP 1 022 677 B1 ist eine kontaktlose Chipkarte bekannt, die eine elektromagnetische Welle von einer Abfragevorrichtung empfängt zur Kommunikation mit der Abfragevorrichtung unter Verwendung der elektromagnetischen Welle als Leistungsquelle.

Der Erfindung liegt die Aufgabe zugrunde, eine Datenträger-/Sendevorrichtung der eingangs genannten Art bereitzustellen, welche für ein metallisches Objekt geeignet ist mit großem Ansprechabstand.

Diese Aufgabe wird bei der eingangs genannten Datenträger-/Sendevorrichtung erfindungsgemäß dadurch gelöst, dass die Spulenachse der mindestens einen Spule mindestens näherungsweise parallel zu der Anlageseite der Fixierungseinrichtung ist.

Durch diese Ausrichtung der mindestens einen Spule ist die Spulenachse mindestens näherungsweise parallel zu dem Oberflächenbereiche des Objekts, an welchem die Datenträgervorrichtung über die Anlageseite fixiert ist. Feldlinien (insbesondere des induktiven Felds) einer Sende-Empfangs-Einrichtung verlaufen dann im Wesentlichen parallel zur Oberfläche des metallischen Objekts. Dadurch wird das Feld vor dem Objekt verdichtet. Dadurch ergibt sich ein relativ großer Ansprechabstand.

Dadurch lässt es sich beispielsweise gewährleisten, dass bei der Vorbeiführung von metallischen Objekten, welche mit der erfindungsgemäßen Datenträgervorrichtung versehen sind, an einem Lesekopf der Lesekopf nicht auf das Objekt zu bewegt werden muss, um Daten aus der Datenträgervorrichtung auslesen zu können.

Beispielsweise ist die Anlageseite eine im Wesentlichen ebene Anlagefläche. Dadurch lässt sich die Datenträgervorrichtung über die Fixierungseinrichtung auf einfache Weise an einem Objekt fixieren.

Durch die erfindungsgemäße Lehre lässt sich auch eine Sendevorrichtung realisieren, welche an einem metallischen Objekt fixierbar ist und dabei ein Sendefeld bereitstellt, welches einen großen Ansprechabstand ermöglicht. Die Sendevorrichtung kooperiert insbesondere mit einer Datenträgervorrichtung, welche einen Schwingkreis mit mindestens einer Spule und eine elektrische Schaltungsanordnung umfasst. Die Sendevorrichtung bildet eine Antennenvorrichtung zur elektromagnetischen Beaufschlagung einer Datenträgervorrichtung. Die Datenträgervorrichtung, mittels welcher die erfindungsgemäße Sendevorrichtung kooperiert, kann entsprechend der erfindungsgemäßen technischen Lehre ausgebildet sein oder eine andere Ausgestaltung haben.

Günstig ist es, wenn die Fixierungseinrichtung eine oder mehrere Durchgangsöffnungen für Befestigungselemente aufweist. Dadurch lässt sich diese auf einfache Weise an einem Objekt fixieren.

Insbesondere ist das Objekt ein metallisches Objekt. Durch die erfindungsgemäße Datenträgervorrichtung lassen sich metallische Objekt wie beispielsweise Motorblöcke mit einem Identifikationscode versehen, der auf einfache Weise auslesbar ist, da ein großer Ansprechabstand bereitgestellt ist.

Es ist auch möglich, dass eine Sendevorrichtung insbesondere zur Fixierung an einem metallischen Objekt bereitgestellt wird.

Die eingangs genannte Aufgabe wird ferner erfindungsgemäß dadurch gelöst, dass ein Metallelement vorgesehen ist, welches zwischen der mindestens einen Spule und dem Objekt angeordnet ist.

Durch ein metallisches Objekt wird die Resonanzfrequenz des Schwingkreises verschoben und zwar üblicherweise zu höheren Frequenzen hin. Wenn die Datenträger-/Sendevorrichtung ein Metallelement enthält, dann sorgt dieses Metallelement für eine "intrinsische" Resonanzverschiebung. Dadurch wird der Einfluss des externen metallischen Objekts verringert, da die durch das externe metallische Objekt verursachte Resonanzverschiebung stark verringert ist. Dies trägt ebenfalls dazu bei, dass sich ein relativ hoher Ansprechabstand (Abstand zwischen dem Objekt, welches mit der Datenträgervorrichtung versehen ist, und der Sende-Empfangs-Einrichtung) ergibt.

Fertigungstechnisch günstig ist es, wenn das Metallelement mindestens teilweises plattenförmig oder folienförmig ausgebildet ist. Es lässt sich dann auf einfache Weise bezüglich der Spule positionieren. Ein plattenförmiges Metallelement kann als Träger für eine Spule verwendet werden.

Ganz besonders vorteilhaft ist es, wenn das Metallelement die mindestens eine Spule zu dem Objekt hin abdeckt. Dadurch ist der Einfluss, welcher ein externes Objekt auf den Schwingkreis ausübt, insbesondere eine Resonanzverschiebung, stark verringert.

Es ist dann besonders vorteilhaft, wenn das Metallelement mindestens die gleiche Breite quer zur Spulenachse und mindestens die gleiche Länge parallel zur Spulenachse wie die mindestens eine Spule aufweist.

Fertigungstechnisch günstig ist es, wenn das Metallelement als Rückplatte der Datenträger-/Sendevorrichtung ausgebildet ist. Dadurch wird durch ein Bauelement ein Träger für die Spule bereitgestellt und ein Metallelement zur "intrinsischen" Resonanzfrequenzverschiebung. Ferner lässt sich die Rückplatte als Fixierungseinrichtung verwenden.

Insbesondere ist die Fixierungseinrichtung mindestens teilweise durch das Metallelement gebildet. Die entsprechende Datenträger-/Sendevorrichtung lässt sich auf einfache Weise herstellen.

Beispielsweise ist das Metallelement aus Aluminium oder Stahl (wie beispielsweise Edelstahl) oder Kupfer hergestellt. Dadurch lässt sich auf einfache Weise eine externe Resonanzfrequenzverschiebung durch ein metallisches Objekt im großen Umfange verhindern.

Günstig ist es, wenn das Metallelement einen Träger für die mindestens eine Spule und/oder die elektrische Schaltungsanordnung bildet. Dadurch lässt sich die entsprechende Datenträger-/Sendevorrichtung auf einfache Weise herstellen.

Es ist dann günstig, wenn das Metallelement eine im Wesentlichen ebene Oberseite aufweist. Es lässt sich dann eine Spule mit einem Spulenkern auf einfache Weise an dem Metallelement positionieren und fixieren.

Günstig ist es, wenn die Fixierungseinrichtung eine oder mehrere Randleisten aufweist. Dadurch lässt sich eine Zentrierung der Spule (welche insbesondere an einem Spulenkern angeordnet ist) an der Fixierungseinrichtung erreichen, um die Herstellung der Datenträger-/Sendevorrichtung zu vereinfachen.

Insbesondere ist die mindestens eine Randleiste aus einem metallischen Material hergestellt, um für eine Resonanzfrequenzverschiebung zu sorgen, so dass wiederum eine Resonanzfrequenzverschiebung aufgrund des externen Einflusses eines Objektes stark vermindert ist.

Insbesondere ist die mindestens eine Randleiste mit einem plattenförmigen Metallelement verbunden. Eine entsprechende Datenträger-/Sendevorrichtung lässt sich auf einfache Weise herstellen.

Es ist dabei günstig, wenn die mindestens eine Randleiste mindestens näherungsweise parallel zu der Spulenachse der mindestens einen Spule orientiert ist. Dadurch ist die Datenträgervorrichtung bezüglich des Feldlinienverlaufs des induktiven Felds parallel zur Spulenachse "offen", so dass eine effektive Ankopplung an ein induktives Feld einer Sende-Empfangs-Einrichtung ermöglicht ist.

Günstig ist es, wenn zwischen gegenüberliegenden Randleisten ein Aufnahmeraum für die mindestens eine Spule und/oder die Schaltungsanordnung gebildet ist. in diesen Aufnahmeraum lässt sich beispielsweise eine Kombination aus Spulenkern und Spule und gegebenenfalls Schaltungsanordnung positionieren. Dadurch wiederum lässt sich die Datenträger-/Sendevorrichtung auf einfache Weise herstellen.

Günstig ist es, wenn der Aufnahmeraum stirnseitig bezogen auf die Spulenachse offen ist. Dadurch wird der Feldlinienverlauf parallel zur Anlageseite und damit parallel zu einer Objektoberfläche im Wesentlichen nicht behindert.

Beispielsweise ist der Aufnahmeraum quaderförmig. Dadurch lässt sich eine Datenträger-/Sendevorrichtung mit geringen Höhenabmessungen ausbilden.

Insbesondere umfasst die elektrische Schaltungsanordnung eine kapazitive Einrichtung. Dadurch kann der Schwingkreis auf einfache Weise hergestellt werden, da die Schwingkreiskapazität in die elektrische Schaltungsanordnung integriert ist.

Günstig ist es, wenn die elektrische Schaltungsanordnung durch einen oder mehrere integrierte Schaltkreise gebildet ist. Diese sind insbesondere in einer geringen Anzahl von Bauelementen integriert, wobei es besonders vorteilhaft ist, wenn die elektrische Schaltungsanordnung ein einziges IC aufweist. Die Datenträger-/Sendevorrichtung lässt sich dann auf einfache Weise herstellen.

Günstig ist es, wenn der elektrischen Schaltungsanordnung ein oder mehrere Abgleichkondensatoren zugeordnet sind. Die Eigenschaften von Bauteilen oder Bauteilmaterialien können streuen. Durch einen oder mehrere Abgleichkondensatoren können diese Streuungen durch einen entsprechenden Abgleich während der Herstellung der Datenträger-/Sendevorrichtung kompensiert werden, um Datenträger-/Sendevorrichtungen herzustellen, welche in ihren Eigenschaften eine geringe Streuung aufweisen.

Günstig ist es, wenn der mindestens einen Spule ein Spulenkern zugeordnet ist. Dieser Spulenkern dient zur "Sammlung" und "Fokussierung" von Feldlinien, um einen großen Ansprechabstand zu erhalten. Der Spulenkern ist aus einem weichmagnetischen Material hergestellt. Beispielsweise ist der Spulenkern aus einem Ferritmaterial hergestellt.

Es ist insbesondere günstig, wenn der Spulenkern mindestens näherungsweise quaderförmig ist. Dadurch lässt sich eine Datenträger-/Sendevorrichtung mit geringen Höhenabmessungen ausbilden.

Ganz besonders vorteilhaft ist es, wenn die mindestens eine Spule Windungen aufweist, welche um den Spulenkern angeordnet sind. Dadurch lässt sich auf einfache Weise eine Spule herstellen, deren Spulenachse parallel zur Anlageseite ist.

Günstigerweise weisen Windungen der mindestens einen Spule Windungsbereiche auf, welche mindestens näherungsweise parallel zu der Anlageseite orientiert sind. Dadurch lässt sich eine Spule bereitstellen, welche flach ausgebildet ist. Dadurch wiederum lässt sich die Datenträger-/Sendevorrichtung mit geringen Höhenabmessungen herstellen.

Es ist dann besonders vorteilhaft, wenn mindestens 80 % und vorzugsweise mindestens 90 % der Gesamtwindungslänge der Spule parallel zur Anlageseite ist. Dadurch lässt sich die Spule flach ausbilden mit einer Spulenachse parallel zur Anlageseite.

Ganz besonders vorteilhaft ist es, wenn der Spulenkern aus einem biegeflexiblen Material hergestellt ist. Ferritstäbe haben das grundsätzliche Problem, dass sie sehr spröde sind und leicht brechen können. Durch das biegeflexible Material ist die Herstellung der Datenträger-/Sendevorrichtung erleichtert. Weichmagnetische Werkstoffe, die als Spulenkern geeignet sind und biegeflexibel sind, sind beispielsweise amorphe Metalle.

Aus dem gleichen Grund ist es günstig, wenn der Spulenkern aus einem Folienmaterial hergestellt ist. Gegebenenfalls lässt sich dann auch die Datenträger-/Sendevorrichtung in gewissem Rahmen flexibel ausbilden, um sie an Oberflächenkonturen eines Objekts anpassen zu können.

Es kann vorgesehen sein, dass die mindestens eine Spule mindestens teilweise über die Schaltungsanordnung gewickelt ist. Dadurch ergibt sich ein einfacher Aufbau, wobei die Datenträger-/Sendevorrichtung mit geringen Abmessungen herstellbar ist. Es ist dabei dafür gesorgt, dass die Spule und die Schaltungsanordnung nicht kurzgeschlossen werden.

Es kann vorgesehen sein, dass die Datenträger-/Sendevorrichtung einen Starrflex-Leiterplatten-Verbund umfasst. Bei einem Starrflex-Leiterplatten-Verbund sind starre Leiterplattenelemente vorgesehen, welche flexibel miteinander verbunden sind. Eine entsprechende Datenträger-/Sendevorrichtung lässt sich auf einfache und kostengünstige Weise herstellen.

Insbesondere ist ein erstes Leiterplattenelement vorgesehen, an dem Windungsbereiche der mindestens einen Spule angeordnet sind.

Ferner ist es günstig, wenn ein zweites Leiterplattenelement vorgesehen ist, an welchem Windungsbereiche der mindestens einen Spule angeordnet sind, wobei das zweite Leiterplattenelement flexibel mit dem ersten Leiterplattenelement verbunden ist. Durch entsprechende Positionierung des ersten Leiterplattenelements und des zweiten Leiterplattenelements zueinander mit einem Spulenkern dazwischen lässt sich eine Spule bereitstellen, welche den Spulenkern umgibt.

Insbesondere erfolgt die Verbindung über Windungsbereiche der mindestens einen Verbindung, das heisst die Windungsbereiche stellen die flexible Verbindung zwischen starren Leiterplattenelementen bereit.

Es kann weiterhin ein drittes Leiterplattenelement vorgesehen sein, um welches Windungsbereiche der mindestens einen Spule angeordnet sind, wobei das dritte Leiterplattenelement flexibel mit dem ersten Leiterplattenelement verbunden ist.

Insbesondere erfolgt die flexible Verbindung über Windungsbereiche der mindestens einen Spule. Es lässt sich dann über das zweite Leiterplattenelement und das dritte Leiterplattenelement mit ihren Teilspulen die Gesamtspule herstellen, welche dann den Spulenkern umgibt.

Beispielsweise ist die Schaltungsanordnung an dem zweiten Leiterplattenelement angeordnet. Dadurch lässt sich die Datenträger-/Sendevorrichtung auf einfache Weise herstellen, wobei jeweils ein Spulenanfang oder ein Spulenende direkt mit der Schaltungsanordnung verbunden werden kann.

Günstig ist es, wenn das zweite Leiterplattenelement und/oder das dritte Leiterplattenelement gegenüberliegend zu dem ersten Leiterplattenelement angeordnet ist. Dadurch kann ein Spulenkern dazwischen positioniert werden.

Ganz besonders vorteilhaft ist es, wenn ein Spulenkern zwischen dem ersten Leiterplattenelement und dem zweite Leiterplattenelement und/oder dem dritten Leiterplattenelement angeordnet ist. Dadurch lässt sich über einen Starrflex-Leiterplatten-Verbund auf einfache Weise eine Kombination aus Spulenkern, den Spulenkern umgebende Spule und Schaltungsanordnung herstellen.

Die Herstellung ist vereinfacht, wenn das zweite Leiterplattenelement und/oder das dritte Leiterplattenelement an dem Spulenkern anliegen. Der Spulenkern liefert dann eine Anlagefläche für das oder die Leiterplattenelemente.

Der Erfindung liegt ferner die Aufgabe zugrunde, ein Verfahren zur Herstellung einer Datenträger-/Sendevorrichtung mit einem Schwingkreis bereitzustellen, welches auf einfache und kostengünstige Weise durchführbar ist.

Diese Aufgabe wird erfindungsgemäß dadurch gelöst, dass ein Spulenanfang einer Spule an einer Schaltungsanordnung fixiert wird und die Schaltungsanordnung an einem Spulenkern fixiert wird.

Die Spule lässt sich dann beispielsweise durch Wicklung oder über einen Starrflex-Leiterplatten-Verbund herstellen, ohne dass ein Spulenträger gedreht oder gewendet werden muss.

Weitere vorteilhafte Verfahren wurden bereits im Zusammenhang mit der erfindungsgemäßen Datenträger-/Sendevorrichtung erläutert.

Insbesondere wird die Spule an dem Spulenkern hergestellt. Beispielsweise wird die Spule um den Spulenkern gewickelt. Dadurch muss der Spulenkern nicht gedreht oder gewendet werden, sondern es lässt sich eine Wicklungsmaschine einsetzen.

Beispielsweise wird der Spulenkern in Folienform hergestellt. Dadurch ist im Vergleich zu einem Ferritstab die Bruchgefahr stark verringert. Weiterhin lässt sich eine Anpassbarkeit an verschiedene Objektanwendungen realisieren.

Beispielsweise ist der Spulenkern quaderförmig ausgebildet. Dadurch lassen sich Datenträgervorrichtungen mit geringen Höhenabmessungen herstellen.

Aus dem gleichen Grund ist es günstig, wenn die Spule flach gewickelt wird.

Es ist ferner günstig, wenn ein Spulenende an der Schaltungsanordnung fixiert wird. Die Fixierung erfolgt beispielsweise durch Schweißung oder Lötung. Dadurch lässt sich die Spule auf einfache Weise an die Schaltungsanordnung koppeln.

Es ist ferner günstig, wenn die Kombination aus Spulenkern und Spule und Schaltungsanordnung an einer Fixierungseinrichtung zur Fixierung der Datenträger-/Sendevorrichtung an einem Objekt fixiert wird. Dadurch lässt sich die Datenträger-/Sendevorrichtung auf einfache Weise herstellen mit geringen Höhenabmessungen.

Ganz besonders vorteilhaft ist es, wenn ein Metallelement an der Kombination aus Spuleneinrichtung und Spule und Schaltungsanordnung positioniert ist oder positioniert wird. Dadurch wird eine "intrinsische" Verschiebung der Resonanzfrequenz erreicht, welche den Einfluss eines externen metallischen Objekts auf die Resonanzfrequenz stark verringert. Dadurch wiederum erhält man einen hohen Ansprechabstand.

Insbesondere ist die Fixierungseinrichtung durch eine Metallplatte gebildet oder umfasst eine Metallplatte. Dadurch lässt sich die Datenträger-/Sendevorrichtung auf einfache Weise herstellen.

Ganz besonders vorteilhaft ist es, wenn eine Abgleichseinrichtung hergestellt wird. Dadurch lassen sich Bauteilstreuungen oder Materialstreuungen durch einen Abgleich während der Herstellung kompensieren.

Insbesondere wird ein Abgleich an einer hergestellten Datenträger-/Sendevorrichtung durchgeführt, so dass die Endprodukte eine geringe Streubreite aufweisen.

Es kann vorgesehen sein, dass ein erstes Leiterplattenelement mit einer Teilspule hergestellt wird und mindestens ein weiteres Leiterplattenelement mit einer weiteren Teilspule hergestellt wird, wobei das erste Leiterplattenelement und das mindestens eine weitere Leiterplattenelement über Spulenbereiche flexibel miteinander verbunden werden. Über einen solchen Starrflex-Leiterplatten-Verbund kann die Datenträger-/Sendevorrichtung auf einfache Weise hergestellt werden. Es lässt sich eine Spule herstellen, welche einen Spulenkern umgibt, wobei die Windungen als Spulenbahn beispielsweise aufgedruckt werden können. Dadurch muss keine Wicklung vorgesehen werden.

Insbesondere wird der Spulenkern zwischen der ersten Leiterplatte und der mindestens einen weiteren Leiterplatte positioniert. Es lässt sich dadurch eine Spule bereitstellen, welche den Spulenkern umgibt. Ferner wird durch den Spulenkern eine Anlagefläche für die mindestens eine weitere Leiterplatte bereitgestellt.

Die erfindungsgemäße Datenträger-/Sendevorrichtung lässt sich auf vorteilhafte Weise an metallischen Objekten verwenden. Beispielsweise lassen sich durch die erfindungsgemäße Datenträgervorrichtung Motorblöcke während deren Herstellung identifizieren.

Die nachfolgende Beschreibung bevorzugter Ausführungsformen dient im Zusammenhang mit der Zeichnung der näheren Erläuterung der Erfindung.

Es zeigen:
- Figur 1: eine schematische Darstellung eines ersten Ausführungsbeispiels einer erfindungsgemäßen Datenträgervorrichtung in Draufsicht;
- Figur 2: eine Schnittdarstellung der Datenträgervorrichtung gemäß Figur 1 längs der Linie 2-2;
- Figur 3: eine schematische Darstellung des Feldverlaufs bei einer erfindungsgemäßen Datenträgervorrichtung ohne metallisches Objekt im Vergleich zu einer bekannten Datenträgervorrichtung;
- Figur 4: schematisch den Feldverlauf eines Ausführungsbeispiels einer erfindungsgemäßen Datenträgervorrichtung, welche an einem metallischen Objekt fixiert ist, im Vergleich zu einer aus dem Stand der Technik bekannten Datenträgervorrichtung;
- Figur 5: ein zweites Ausführungsbeispiel einer erfindungsgemäßen Datenträgervorrichtung in Draufsicht;
- Figur 6: eine Schnittansicht der Datenträgervorrichtung gemäß Figur 5 längs der Linie 6-6;
- Figur 7: eine seitliche Schnittansicht eines dritten Ausführungsbeispiels einer erfindungsgemäßen Datenträgervorrichtung nach dem Zusammenbau und in einem Teilschritt des Herstellungsverfahrens; und
- Figur 8: die Datenträgervorrichtung gemäß Figur 7 in einem Teilschritt des Herstellungsverfahrens.

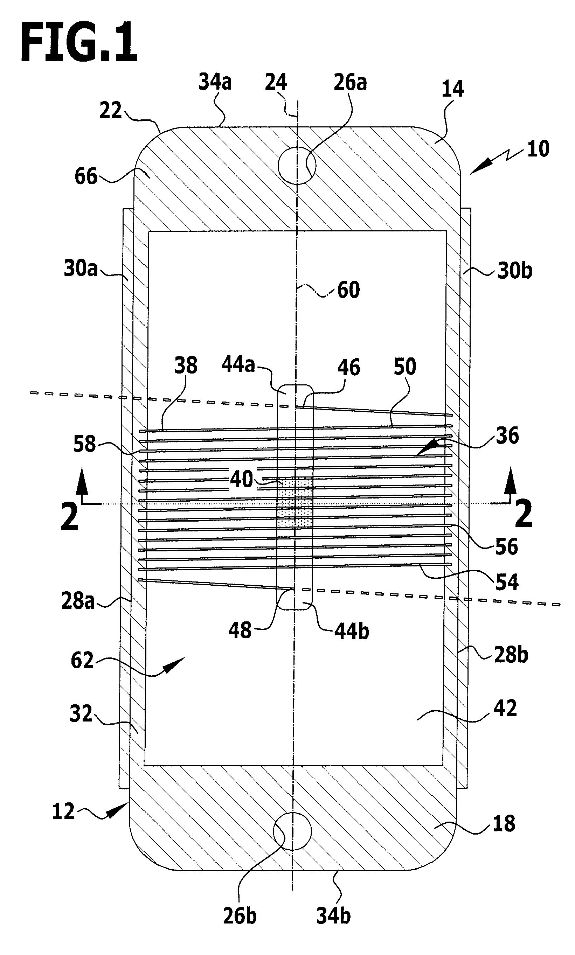

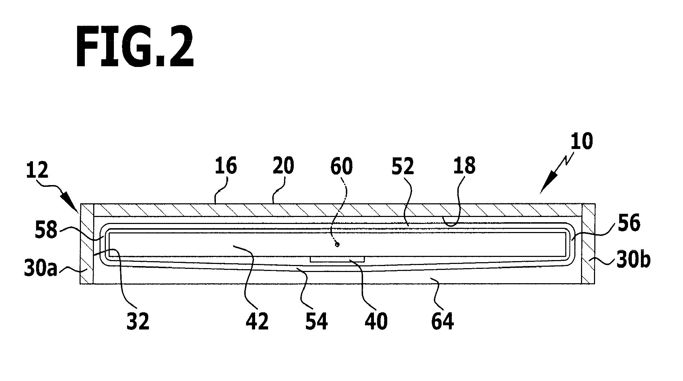

Ein erstes Ausführungsbeispiel einer erfindungsgemäßen Datenträgervorrichtung, welches in den Figuren 1 und 2 gezeigt und dort mit 10 bezeichnet ist, umfasst eine Fixierungseinrichtung 12, mittels welcher die Datenträgervorrichtung 10 an einem Objekt, welches über die Datenträgervorrichtung 10 identifiziert werden soll, fixierbar ist.

In dem gezeigten Ausführungsbeispiel umfasst die Fixierungseinrichtung 12 eine Platte 14 aus einem metallischen Material. Beispielsweise ist die Platte 14 aus (Edel-)Stahl, Aluminium oder Kupfer hergestellt. Die Platte 14 weist eine im Wesentlichen ebene Unterseite 16 und eine im Wesentlichen ebene Oberseite 18 auf. Die Unterseite 16 und die Oberseite 18 sind parallel zueinander. Die Unterseite 16 bildet eine Anlageseite 20 der Datenträgervorrichtung 10 an ein Objekt mit einer ebenen Anlagefläche.

Die Platte 14 ist im Wesentlichen quaderförmig ausgestaltet mit abgerundeten oder abgefasten Ecken 22.

Die Platte 14 ist insbesondere spiegelsymmetrisch zu einer Mittelachse 24 ausgebildet.

An der Platte 14 sind beabstandet zueinander durchgehende Öffnungen 26a, 26b angeordnet. Diese liegen beispielsweise auf der Mittelachse 24. Über sie lässt sich die Fixierungseinrichtung 12 an einem Objekt beispielsweise über Schrauben fixieren.

An der Platte 14 sind an den längeren Seiten 28a, 28b Randleisten 30a, 30b angeordnet. Diese Randleisten 30a, 30b sind im Wesentlichen parallel zu der Mittelachse 24 ausgerichtet und mindestens näherungsweise parallel zueinander.

Die Randleisten 30a, 30b liegen zu der Unterseite 16 der Platte 14 im Wesentlichen bündig oder sind gegenüber der Unterseite 16 zurückgesetzt; sie ragen nicht über die Unterseite 16 hinaus, um eine einfache und gute Fixierbarkeit der Datenträgervorrichtung 10 an dem Objekt zu ermöglichen. Sie ragen über die Oberseite 18 der Platte 14 hinaus. Dadurch ist zwischen der Oberseite 18 der Platte 14 und den Randleisten 30a, 30b ein Aufnahmeraum 32 gebildet. Dieser Aufnahmeraum 32 hat eine im Wesentlichen quaderförmige Gestalt. Er ist zu Stirnseiten 34a, 34b, welche quer und insbesondere senkrecht zu der Mittelachse 24 liegen, offen.

Die Randleisten 30a, 30b erstrecken sich bei der Datenträgervorrichtung 10 nicht über die ganze Länge der Platte 14 (parallel zur Mittelachse 24), sondern sind gegenüber den Stirnseiten 34a, 34b zurückgesetzt.

In dem Aufnahmeraum 32 ist ein Schwingkreis 36 angeordnet. Dieser Schwingkreis 36 ist mittels (mindestens) einer Spule 38 und einer Kapazität gebildet, welche von einer Schaltungsanordnung 40 umfasst ist. Die Schaltungsanordnung ist insbesondere eine integrierte Schaltungsanordnung, welche durch einen IC gebildet ist und welche die Kapazität umfasst. Diese liegt beispielsweise in dem Bereich zwischen 20 pF bis 100 pF.

Die Schaltungsanordnung 40 umfasst weitere Komponenten zur Ansteuerung des Schwingkreises 36.

Die Spule 38 ist an einem Spulenkern 42 angeordnet. Der Spulenkern 42 ist aus einem weichmagnetischen Material mit hoher magnetischer Permeabilität und niedrigem magnetischen Verlust hergestellt. Ein grundsätzlich geeignetes Material ist ein Ferritmaterial.

Es ist vorgesehen, dass der Spulenkern 42 aus einem biegeflexiblen Material hergestellt ist. Beispielsweise ist der Spulenkern 42 aus einem Folienmaterial hergestellt. Ein Beispiel eines solchen weichmagnetischen Folienmaterials ist das Material "LIQUALLOY" der ALPS ELECTRIC CO., LTD., 1 - 7, Yukigayaotsuka-cho, Ota-ku, Tokio, 145-8501, Japan. Bei diesem Material handelt es sich um ein amorphes Metall.

Der Spulenkern 42 ist quaderförmig ausgebildet und an die Dimensionen des Aufnahmeraums 32 angepasst.

Der Spulenkern 42 kann auch als Absorberfolie bezeichnet werden, da Magnetfeldlinien gewissermaßen absorbiert werden.

Die Schaltungsanordnung 40 sitzt an einer Oberseite des Spulenkerns 42. Beispielsweise ist sie auf diesen Spulenkern 42 aufgeklebt. Die Schaltungsanordnung 40 sitzt insbesondere an der Mittelachse 24 und mittig bezogen auf die Stirnseiten 34a und 34b.

Der Schaltungsanordnung 40 ist eine erste Leitfläche 44a in Richtung der Stirnseite 34a zugeordnet, welche insbesondere an der Mittelachse 24 liegt. Ferner ist der Schaltungsanordnung 40 eine zweite Leitfläche 44b zugeordnet, welche sich auf der Mittelachse 24 in Richtung der Stirnseite 34b erstreckt. Über die Leitflächen 44a, 44b ist eine leitfähige Verbindung zwischen der Schaltungsanordnung 40 und der Spule 38 hergestellt.

Die Leitflächen 44a und 44b können auch Teil der Schaltungsanordnung 40 sein.

An der ersten Leitfläche 44a ist ein Spulenanfang 46 der Spule 38 elektrisch und mechanisch fixiert. An der zweiten Leitfläche 44b ist elektrisch und mechanisch ein Spulenende 48 der Spule 38 beispielsweise über Schweißen oder Löten fixiert. Die Spule 38 ist zwischen dem Spulenanfang 46 und dem Spulenende 48 um den Spulenkern 42 gewickelt, wobei die Spule 38 in dem Aufnahmeraum 32 positioniert ist.

Die Spule 38 umfasst Windungen 50, welche um den Spulenkern 42 geführt sind. Eine Windung 50 umfasst einen unteren Windungsbereich 52, welcher der Oberseite 18 der Fixierungseinrichtung 12 zugewandt ist, einen oberen Windungsbereich 54, welcher auf der gegenüberliegenden Seite des Spulenkerns 42 angeordnet ist, einen Querwindungsbereich 56, welcher den unteren Windungsbereich und den oberen Windungsbereich 54 miteinander verbindet, sowie einen Querwindungsbereich 58, welcher zur Verbindung mit der nächsten Windung dient. Die Querwindungsbereiche 56, 58 sind den Randleisten 30a, 30b zugewandt.

Der untere Windungsbereich 52 und der obere Windungsbereich 54 sind im Wesentlichen parallel zu der Oberseite 18 der Fixierungseinrichtung 12. Sie liegen im Wesentlichen eben an dem Spulenkern 42 an (wobei der Spulenkern eine ebene Unterseite und eine ebene Oberseite hat).

Der größte Längenanteil einer Windung 50 liegt in dem unteren Windungsbereich 52 und in dem oberen Windungsbereich 54. Insbesondere sind mindestens 80 % und vorzugsweise mindestens 90 % der Gesamtlänge einer Windung 50 in dem unteren Windungsbereich 52 und in dem oberen Windungsbereich 54, das heisst höchstens 20 % und vorzugsweise höchstens 10 % der Gesamtlänge liegen in den Querwindungsbereichen 56 und 58.

Derjenige Bereich der Leitflächen 44a, 44b, der von den Windungen 50 überdeckt wird, ist mit einer Isolierung versehen, um einen elektrischen Kontakt zwischen der Spule 38 außerhalb des Spulenanfangs 46 und des Spulenendes 48 mit den Leitflächen 44a, 44b zu verhindern. Beispielsweise ist dazu eine Isolierfolie auf den Leitflächen 44a und 44b angeordnet.

Eine Spulenachse 60 der Spule liegt im Wesentlichen parallel zur Anlageseite 20 der Datenträgervorrichtung 10 an ein Objekt. Sie ist insbesondere im Wesentlichen koaxial zur Mittelachse 24 der Datenträgervorrichtung 10 bzw. parallel zu dieser. Dadurch ist die Spulenachse 60 auch im Wesentlichen parallel zu den Randleisten 30a, 30b.

In dem Aufnahmeraum 32 ist eine Kombination 62 aus Spulenkern 42, Spule 38 und Schaltungsanordnung 40 positioniert. Diese Kombination 62 weist insbesondere solche Höhenabmessungen auf, dass sie nicht über die Randleisten 30a, 30b hinausragt.

Diese Kombination 62 kann in dem Aufnahmeraum 32 eingegossen sein. In Figur 2 ist schematisch ein entsprechendes Gießmaterial 64 angedeutet.

Der Spule 38 ist ein Metallelement 66 zugeordnet, welches die Spule 38 zu der Anlageseite 20 hin gegenüber dem Objekt abdeckt, das heisst das Metallelement 66 ist zwischen dem Objekt und der Spule 38 angeordnet, wobei das Metallelement eine Breite aufweist, welche quer zur Mittelachse 24 (und damit quer zur Spulenachse 60) mindestens so breit ist wie die Spule 38. Ferner weist das Metallelement 66 eine Länge parallel zur Spulenachse 60 (und damit parallel zur Mittelachse 24) auf, welche mindestens so groß wie die Länge der Spule 38 in dieser Richtung ist.

Bei der Datenträgervorrichtung 10 ist das Metallelement 66 durch die Platte 14 gebildet, welche auch ein Träger für die Kombination 62 ist. Das Metallelement 66 als Platte 14 bildet eine Rückplatte der Datenträgervorrichtung 10.

Es ist grundsätzlich auch möglich, dass das Metallelement 66 und die Fixierungseinrichtung 12 getrennt voneinander sind.

Es kann vorgesehen sein, dass das Metallelement 66 starr ausgebildet ist, beispielsweise als Platte 14. Es ist auch möglich, dass das Metallelement 66 flexibel ausgebildet ist.

Die Datenträgervorrichtung 10 lässt sich wie folgt herstellen:

Es wird der Spulenkern 42 bereitgestellt. Auf diesem wird die Schaltungsanordnung 40 mit den Leitflächen 44a, 44b angeordnet. Der Spulenanfang 46 wird an der ersten Leitfläche 44a beispielsweise durch Schweißung oder Lötung mechanisch und elektrisch fixiert. Ausgehend von diesem Spulenanfang 46 wird die Spule 38 durch Wicklung auf dem Spulenkern 42 hergestellt. Das Spulenende 48 wird beispielsweise durch Schweißung oder Lötung an der zweiten Leitfläche 44b mechanisch und elektrisch fixiert.

Die so hergestellte Kombination 62 aus Spulenkern 42, Spule 38 und Schaltungsanordnung 40 wird auf der Platte 14 mit den Randleisten 30a, 30b fixiert und vergossen. Die Kombination 62 wird an der Platte 44 beispielsweise durch gegenüberliegende Raupen fixiert, bevor der Verguss erfolgt.

Die erfindungsgemäße Datenträgervorrichtung 10 funktioniert wie folgt:

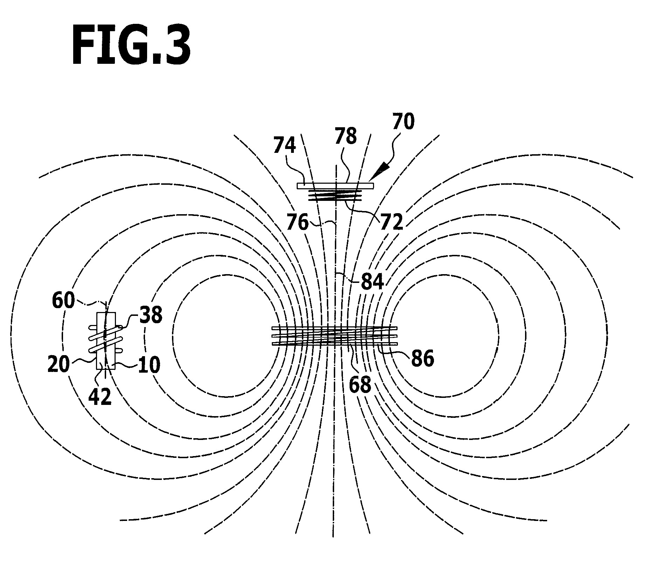

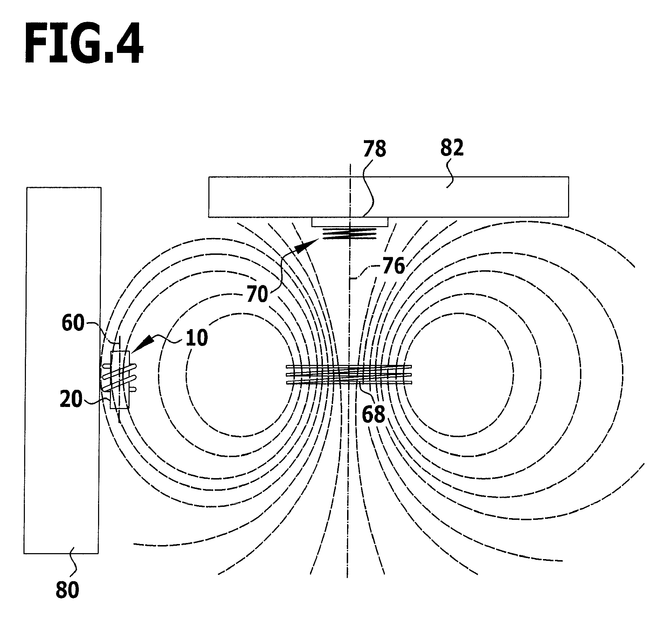

Bei der Datenträgervorrichtung 10 handelt es sich insbesondere um eine RFID-Datenträgervorrichtung (RFID - Radio Frequency Identification). Der Schwingkreis 36 mit der Schaltungsanordnung 40 bildet einen Transponder. Zum Lesen und gegebenenfalls zum Speichern von Daten in der Datenträgervorrichtung 10 wird eine Lese-Empfangs-Einrichtung 68 (Figuren 3, 4) mit einem Lesekopf verwendet. Die Datenübertragung zwischen Lese-Empfangs-Einrichtung 68 und der Datenträgervorrichtung 10 erfolgt elektromagnetisch. Die Datenträgervorrichtung 10 erhält ihre Energie zur Datenübertragung an die Lese-Empfangs-Einrichtung 68 von Letzterer. Der Schwingkreis 36 bildet eine Antenne (Transponder-Antenne). In der Spule 38 wird durch das elektromagnetische Anregungsfeld der Lese-Empfangs-Einrichtung 68 ein Induktionsstrom induziert. Dieser aktiviert die Schaltungsanordnung 40.

Die Datenträgervorrichtung 10 ist insbesondere ein passiver Transponder; bei diesem wird die Kapazität des Schwingkreises 36 aufgeladen, um für die Stromversorgung der Schaltungsanordnung 40 zu sorgen. Bei aktivierter Schaltungsanordnung 40 kann diese Befehle von der Lese-Empfangs-Einrichtung 68 empfangen bzw. sie kann Daten an die Lese-Empfangs-Einrichtung 68 übermitteln. Diese Übermittlung erfolgt durch Lastmodulation, das heisst Veränderung des elektromagnetischen Feldes, welche durch die Lese-Empfangs-Einrichtung 68 abgestrahlt wird. Diese Veränderung wiederum kann durch die Lese-Empfangs-Einrichtung 68 detektiert werden.

Die Datenträgervorrichtung ist als Nahfeld-Datenträgervorrichtung ausgebildet. Die unverschobene Schwingkreisfrequenz (siehe unten) liegt beispielsweise bei ca. 13,56 MHz oder im Bereich zwischen 125 kHz und 135 kHz.

Die erfindungsgemäße Datenträgervorrichtung ist zur Verwendung an einem metallischen Objekt vorgesehen. Durch das Metallelement 66, welches bei der Datenträgervorrichtung 10 durch die Platte 14 bereitgestellt ist, wird die Resonanzfrequenz des Schwingkreises 36 verschoben und zwar üblicherweise auf eine höhere Frequenz. Durch das Metallelement 66, welches in die Datenträgervorrichtung 10 integriert ist, wird eine definierte "intrinsische" Frequenzverschiebung erzeugt. Der Einfluss eines metallischen Objekts, an welchem die Datenträgervorrichtung 10 angeordnet ist, ist dadurch stark reduziert. Durch das Metallelement 66 wird also eine Resonanzfrequenz des Schwingkreises 36 eingestellt, welche gegenüber der Resonanzfrequenz des Schwingkreises ohne Metallelement 66 modifiziert ist und insbesondere oberhalb dieser liegt. Dadurch ist aber der Einfluss eines metallischen Objekts (wie beispielsweise eines Motorblocks), an dem die Datenträgervorrichtung 10 fixiert ist, stark reduziert, das heisst die externe Veränderung der Resonanzfrequenz durch das externe Objekt ist stark verringert.

In Figur 3 ist schematisch der Verlauf des induktiven Felds der Lese-Empfangs-Einrichtung 68 gezeigt. Mit dem Bezugszeichen 70 ist eine aus dem Stand der Technik bekannte Datenträgervorrichtung gezeigt, welche eine Spule 72 umfasst, die an einem Träger 74 angeordnet ist. Die Spule 72 weist eine Spulenachse 76 auf, welche senkrecht zu einer Anlageseite 78 der Datenträgervorrichtung 70 orientiert ist. Mit dieser Anlageseite 78 ist die Datenträgervorrichtung 70 an ein Objekt angelegt (Figur 4).

Bei der erfindungsgemäßen Lösung ist dagegen die Spulenachse 60 im Wesentlichen parallel zu der Anlageseite 20.

In Figur 4 ist der Einfluss eines metallischen Objekts (für die Datenträgervorrichtung 10) und eines metallischen Objekts 82 (für die Datenträgervorrichtung 70) gezeigt. Die Anlageseite 20 der Datenträgervorrichtung 10 liegt an dem Objekt 80 an. Sie ist im Wesentlichen parallel zu einer Oberfläche des Objekts 80 orientiert. Die Spulenachse 60 ist im Wesentlichen parallel zu dem Oberflächenbereich, an dem die Datenträgervorrichtung 10 fixiert ist, orientiert.

Für die Datenträgervorrichtung 70 liegt die Anlageseite 78 an dem metallischen Objekt 82 an. Die Spulenachse 76 ist senkrecht zu dieser Anlageseite 78 und damit zu dem Oberflächenbereich des Objekts 82, an dem die Datenträgervorrichtung 70 über ihre Anlageseite 78 anliegt.

Man erkennt aus Figur 4 den unterschiedlichen Feldverlauf des induktiven Felds. Das induktive Feld wird durch die Objekts 80, 82 verändert. Es verläuft bei der Anordnung der Datenträgervorrichtung 10 näherungsweise parallel zur Oberfläche des metallischen Objekts 80. Dies führt zu einer Feldverdichtung. Eine solche Feldverdichtung lässt sich mit der Datenträgervorrichtung 70 nicht erreichen.

Anzumerken ist noch, dass eine Spulenachse 84 einer Spule 86 der Lese-Empfangs-Einrichtung 68 bei der Datenträgervorrichtung 70 mindestens näherungsweise mit den Spulenachsen 76 bzw. 60 parallel ausgerichtet sein sollte, um eine effektive Feldbeaufschlagung der entsprechenden Spulen 38 bzw. 72 der Datenträgervorrichtung 10 bzw. 70 zu erhalten.

Durch die Ausrichtung der Spule 38 mit ihrer Spulenachse 60 parallel zur Anlageseite 20 treffen die Feldlinien des induktiven Felds in einem flachen Winkel auf den Spulenkern 42. Dadurch werden die Feldlinien gewissermaßen in den Spulenkern 42 gezogen. Es ergibt sich dadurch eine Feldverstärkung und der Detektionsabstand wird erhöht.

Dadurch ist es beispielsweise möglich, Datenträgervorrichtungen 10, welche an metallischen Objekten 80 fixiert sind, mit festem Lesekopf der Lese-Empfangs-Einrichtung 68 auszulesen, das heisst der Lesekopf muss nicht mehr dem Objekt zugefahren werden. Metallische Objekte 80 lassen sich direkt zur Feldlinienformung verwenden.

Durch das Metallelement 66 wird eine weitere Abstandserhöhung erreicht, da der Einfluss des Objekts 80 auf die Resonanzfrequenz stark verringert ist.

Die Datenträgervorrichtung 10 lässt sich auf einfache Weise herstellen. Beispielsweise ist kein Drehen oder Wenden des Spulenkerns 42 notwendig, da sich die Spule 38 direkt auf diesen wickeln lässt.

Durch die Verwendung eines flexiblen Materials als Spulenkern 42 ist die Bruchgefahr im Vergleich zu einem starren Ferritstab als Spulenkern verhindert.

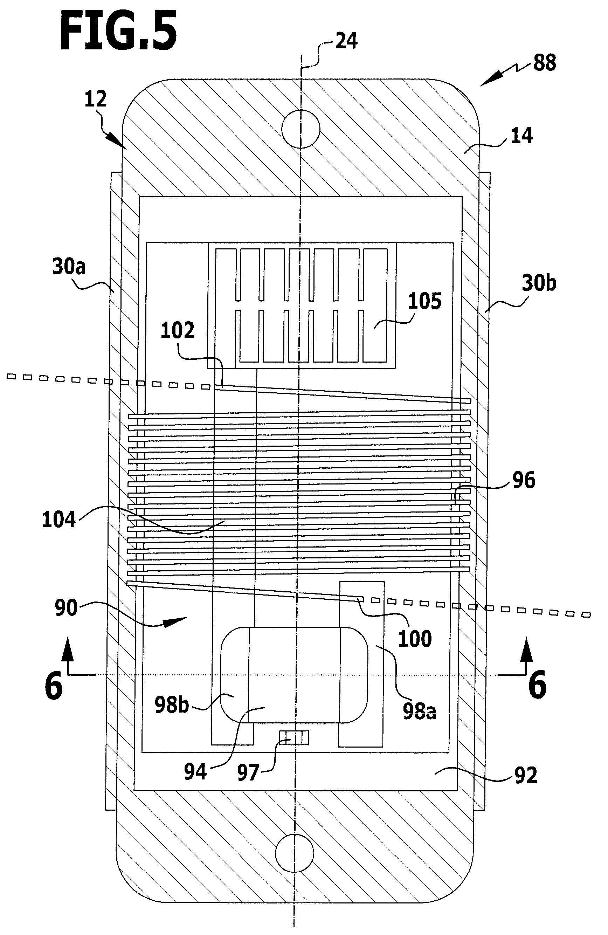

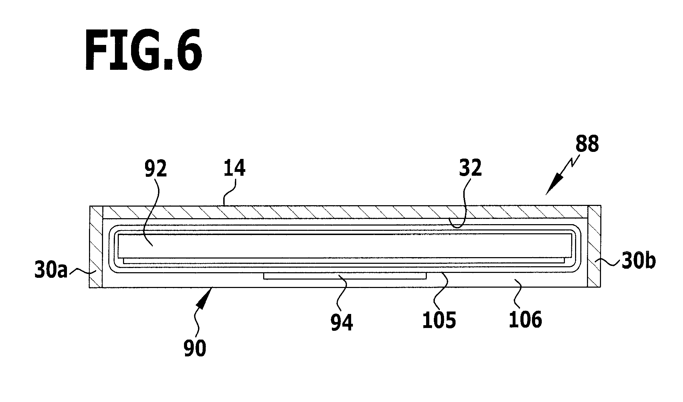

Bei einem zweiten Ausführungsbeispiel einer erfindungsgemäßen Datenträgervorrichtung, welches in den Figuren 5 und 6 gezeigt und dort mit 88 bezeichnet ist, ist die Fixierungseinrichtung grundsätzlich gleich aufgebaut wie bei der Datenträgervorrichtung 10. Es werden deshalb gleiche Bezugszeichen verwendet. In dem Aufnahmeraum 32 der Fixierungseinrichtung 12 der Datenträgervorrichtung 88 ist eine Kombination 90 aus einem Spulenkern 92, einer Schaltungsanordnung 94 und einer Spule 96 angeordnet.

Die Schaltungsanordnung 94 sitzt auf dem Spulenkern 92. Ihr ist eine erste Leitfläche 98a und eine zweite Leitfläche 98b zugeordnet. Die Leitfläche 98a und 98b liegen auf gegenüberliegenden Seiten bezogen auf die Mittelachse 24. An der ersten Leitfläche 98a ist ein Spulenanfang 100 der Spule 96 fixiert. An der zweiten Leitfläche 98b ist ein Spulenende 102 der Spule 96 fixiert. Die Leitfläche 98a ist dabei kürzer als die Leitfläche 98b. Die erste Leitfläche 98a ist so ausgestaltet, dass sie außerhalb der Spule 96 bis auf den Spulenanfang 100 liegt. Die zweite Leitfläche 98b erstreckt sich von der Schaltungsanordnung 94 bis zu einem gegenüberliegenden Ende des Spulenkerns 92. Die Spule 96 ist über einen Bereich 104 der zweiten Leitfläche 98b gewickelt, wobei kein elektrischer Kontakt vorliegt.

Der Spule 96 ist ein Kondensator 97 zur Bildung eines Schwingkreises zugeordnet. Dieser ist beispielsweise neben einem IC, durch welchen die Schaltungsanordnung 94 realisiert ist, auf den Spulenkern 92 aufgelötet.

An die zweite Leitfläche 98b ist eine Kondensatoreinrichtung 105, welche einen oder mehrere Kondensatoren umfasst, elektrisch gekoppelt. Die Spule 96 ist zwischen der Kondensatoreinrichtung 105 und der Schaltungsanordnung 94 positioniert.

Durch die Kondensatoreinrichtung 105, welche insbesondere einen oder mehrere flächige Kondensatoren aufweist, ist eine Abgleicheinrichtung gebildet. Beispielsweise durch Laserabgleich lässt sich die Gesamtkapazität des Schwingkreises der Datenträgervorrichtung 88 bei der Herstellung gezielt modifizieren. Dadurch können Bauteilstreuungen bzw. Materialstreuungen bei der Herstellung der Datenträgervorrichtung 88 kompensiert werden.

Beispielsweise wird bei der Herstellung der Datenträgervorrichtung 88 nach dem Aufbringen von durchsichtigem Vergussmaterial 106 (und nach dessen Aushärten) ein Laserabgleich an der Kondensatoreinrichtung 105 durchgeführt.

Ansonsten funktioniert die Datenträgervorrichtung 88 wie oben anhand der Datenträgervorrichtung 10 beschrieben.

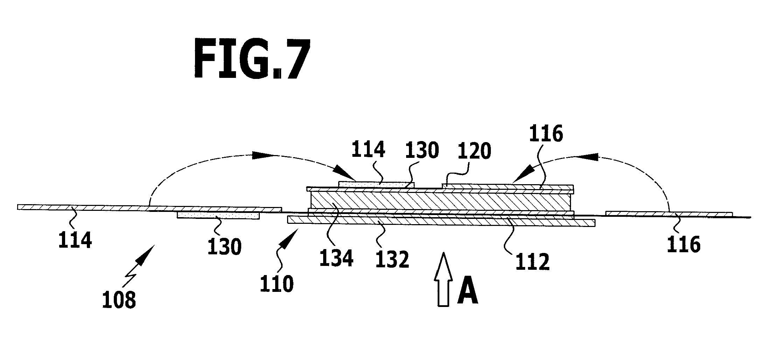

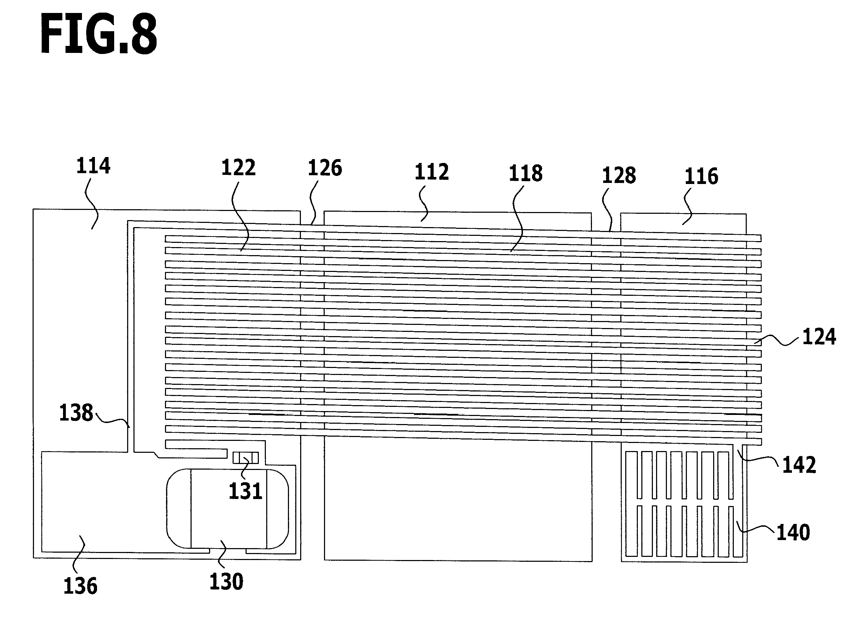

Bei einem dritten Ausführungsbeispiel einer erfindungsgemäßen Datenträgervorrichtung, welche in Figur 7 gezeigt und dort mit 108 bezeichnet ist (und in Figur 8 in einem Zustand während eines Teilschritts des Herstellungsverfahrens gezeigt ist), ist eine Spule an einem Starrflex-Leiterplatten-Verbund 110 gebildet. Starrflex-Leiterplatten-Verbunde bestehen aus einer Kombination von starren und flexiblen Leiterplatten, welche unlösbar miteinander verbunden sind.

Der Starrflex-Leiterplatten-Verbund 110 umfasst ein erstes Leiterplattenelement 112, ein zweites Leiterplattenelement 114 und ein drittes Leiterplattenelement 116. Diese Leiterplattenelemente 112, 114 und 116 sind starr ausgebildet. An dem ersten Leiterplattenelement 112 ist ein erster Spulenteil 118 einer Spule 120 eines Schwingkreises der Datenträgervorrichtung 108 angeordnet. An dem zweiten Leiterplattenelement 114 ist ein zweiter Spulenteil 122 der Spule 120 angeordnet und an dem dritten Leiterplattenelement 116 ist ein dritter Spulenteil 124 der Spule 120 angeordnet. Der erste Spulenteil 118, der zweite Spulenteil 122 und der dritte Spulenteil 124 ergänzen sich zu der Spule 120.

Die Flex-Verbindung zwischen dem ersten Leiterplattenelement 112 und dem zweiten Leiterplattenelement 114 erfolgt durch Windungsbereiche 126 der Spule 120, welche die Spulenteile 118 und 122 verbinden. Die Flex-Verbindung zwischen der ersten Leiterplatte 112 und der dritten Leiterplatte 116 erfolgt über Windungsbereiche 128 der Spule 120, welche die Spulenteile 118 und 124 miteinander verbinden.

An dem zweiten Leiterplattenelement 114 sind eine Schaltungsanordnung 130 und ein (Schwingkreis-)Kondensator 131 angeordnet.

Das erste Leiterplattenelement 112 sitzt insbesondere flächig an einem Träger 132. Dieser Träger 132 ist insbesondere ein Metallelement entsprechend der Platte 14, wie sie im Zusammenhang mit der Datenträgervorrichtung 10 beschrieben wurde.

Auf dem ersten Leiterplattenelement 112 ist ein Spulenkern 134 angeordnet, welcher insbesondere quaderförmig ausgebildet ist. Dieser Spulenkern ist insbesondere als Absorberfolie ausgebildet, wie oben im Zusammenhang mit der Datenträgervorrichtung 10 beschrieben.

Auf dem Spulenkern 134 wiederum sind diesem anliegend das zweite Leiterplattenelement 114 und das dritte Leiterplattenelement 116 angeordnet, wobei diese sich elektrisch kontaktieren, um geschlossene Spulenwindungen zu bilden, welche den Spulenkern 134 umgeben.

Dazu weisen die Windungsbereiche 126, 128, welche die flexible Verbindung zwischen dem ersten Leiterplattenelement 112 und jeweils dem zweiten Leiterplattenelement 114 und dritten Leiterplattenelement 116 herstellen, im Wesentlichen eine solche Länge auf, welche der Höhe des Spulenkerns 134 entspricht.

Das erste Leiterplattenelement 112 ist mit einer Leitfläche 136 versehen, an welche ein Spulenanfang 138 der Spule 120 gekoppelt ist. Das dritte Leiterplattenelement 116 ist mit einer Leitfläche 140 versehen, an welche an Spulenende 142 der Spule 120 gekoppelt ist. Die Leitflächen 136 und 140 liegen außerhalb von Spulenwindungen der Spule 120. Wenn das zweite Leiterplattenelement 114 und das dritte Leiterplattenelement 116 an dem Spulenkern 134 positioniert sind, und insbesondere an diesen anliegen, dann ist die Leitfläche 140 an die Schaltungsanordnung 130 elektrisch gekoppelt, um einen Schwingkreis mit integrierter Schaltungsanordnung 130 bereitzustellen.

Zur Herstellung der Datenträgervorrichtung 108 wird der Starrflex-Leiterplatten-Verbund 110 hergestellt. Das erste Leiterplattenelement 112 wird auf dem Träger 132 positioniert. Der Spulenkern 134 wird auf dem ersten Leiterplattenelement 112 positioniert. Anschließend werden das zweite Leiterplattenelement 114 und das dritte Leiterplattenelement 116 durch Verschwenkung auf den Spulenkern 134 zu auf diesem positioniert. Bei richtiger Positionierung ist automatisch ein elektrischer Kontakt des Spulenendes 142 zu der Schaltungsanordnung 130 hergestellt.

Diese Anordnung kann dann vergossen werden.

Die Datenträgervorrichtung 108 funktioniert ansonsten so wie oben im Zusammenhang mit der Datenträgervorrichtung 10 beschrieben.

Erfindungsgemäß wird auch eine Sendevorrichtung bereitgestellt, welche grundsätzlich den gleichen Aufbau aufweist, wie die oben beschriebenen Datenträgervorrichtungen. Diese Sendevorrichtung kann Teil der Lese-Empfangs-Einrichtung 68 sein. Insbesondere bildet sie eine Antennenvorrichtung, welche ein elektromagnetisches Feld abstrahlt, um eine Datenträgervorrichtung zu beaufschlagen.

## Patentansprüche

1. Datenträger-/Sendevorrichtung zur Fixierung an einem Objekt (80), umfassend einen Schwingkreis (36) mit mindestens einer Spule (38; 86; 120), eine elektrische Schaltungsanordnung (40; 94; 130), an welche die mindestens eine Spule (38; 86; 120) gekoppelt ist, und eine Fixierungseinrichtung (12) mit einer Anlageseite (20) an das Objekt (80), **dadurch gekennzeichnet , dass** die Spulenachse (60) der mindestens einen Spule (38; 86; 120) mindestens näherungsweise parallel zu der Anlageseite (20) der Fixierungseinrichtung (12) ist.

2. Datenträger-/Sendevorrichtung nach Anspruch 1, **dadurch gekennzeichnet, dass** die Anlageseite (20) eine im Wesentlichen ebene Anlagefläche aufweist.

3. Datenträger-/Sendevorrichtung nach Anspruch 1 oder 2, **dadurch gekennzeichnet, dass** die Fixierungseinrichtung (12) eine oder mehrere Durchgangsöffnungen (26a; 26b) für Befestigungselemente aufweist.

4. Datenträger-/Sendevorrichtung nach einem der vorangehenden Ansprüche, **dadurch gekennzeichnet, dass** Objekt (80) ein metallisches Objekt ist.

5. Datenträger-/Sendevorrichtung nach dem Oberbegriff von Anspruch 1 oder einem der vorangehenden Ansprüche, **gekennzeichnet durch** ein Metallelement (66; 14; 132), welches zwischen der mindestens einen Spule (38; 86; 120) und dem Objekt angeordnet ist.

6. Datenträger-/Sendevorrichtung nach Anspruch 5, **dadurch gekennzeichnet, dass** das Metallelement (66; 14; 132) mindestens teilweise plattenförmig oder folienförmig ausgebildet ist.

7. Datenträger-/Sendevorrichtung nach Anspruch 5 oder 6, **dadurch gekennzeichnet, dass** das Metallelement (66; 14; 132) die mindestens eine Spule (38; 86; 120) zu dem Objekt (80) hin abdeckt.

8. Datenträger-/Sendevorrichtung nach Anspruch 7, **dadurch gekennzeichnet, dass** das Metallelement (66) mindestens die gleiche Breite quer zur Spulenachse (60) und mindestens die gleiche Länge parallel zur Spulenachse wie die mindestens eine Spule (38; 86; 120) aufweist.

9. Datenträger-/Sendevorrichtung nach einem der Ansprüche 5 bis 8, **dadurch gekennzeichnet, dass** das Metallelement (66) als Rückplatte der Datenträgervorrichtung ausgebildet ist.

10. Datenträger-/Sendevorrichtung nach einem der Ansprüche 5 bis 9, **dadurch gekennzeichnet, dass** die Fixierungseinrichtung (12) mindestens teilweise durch das Metallelement (66) gebildet ist.

11. Datenträger-/Sendevorrichtung nach einem der Ansprüche 5 bis 10, **dadurch gekennzeichnet, dass** das Metallelement (66) aus Aluminium oder Stahl oder Kupfer hergestellt ist.

12. Datenträger-/Sendevorrichtung nach einem der Ansprüche 5 bis 11, **dadurch gekennzeichnet, dass** das Metallelement (66) einen Träger (14; 132) für die mindestens eine Spule (38; 86; 120) und/oder die elektrische Schaltungsanordnung (40; 94; 130) bildet.

13. Datenträger-/Sendevorrichtung nach einem der Ansprüche 5 bis 12, **dadurch gekennzeichnet, dass** das Metallelement (66) eine im Wesentlichen ebene Oberseite (18) aufweist.

14. Datenträger-/Sendevorrichtung nach einem der vorangehenden Ansprüche, **dadurch gekennzeichnet, dass** die Fixierungseinrichtung (12) eine oder mehrere Randleisten (30a; 30b) aufweist.

15. Datenträger-/Sendevorrichtung nach Anspruch 14, **dadurch gekennzeichnet, dass** die mindestens eine Randleiste (30a; 30b) aus einem metallischen Material hergestellt ist.

16. Datenträger-/Sendevorrichtung nach Anspruch 14 oder 15, **dadurch gekennzeichnet, dass** die mindestens eine Randleiste (30a; 30b) mit einem plattenförmigen Metallelement (66; 14) verbunden ist.

17. Datenträger-/Sendevorrichtung nach einem der Ansprüche 14 bis 16, **dadurch gekennzeichnet, dass** die mindestens eine Randleiste (30a; 30b) mindestens näherungsweise parallel zu der Spulenachse (60) der mindestens einen Spule (38; 86; 120) orientiert ist.

18. Datenträger-/Sendevorrichtung nach einem der Ansprüche 14 bis 17, **dadurch gekennzeichnet, dass** zwischen gegenüberliegenden Randleisten (30a, 30b) ein Aufnahmeraum (32) für die mindestens eine Spule (38; 86) und/oder die Schaltungsanordnung (40; 94) gebildet ist.

19. Datenträger-/Sendevorrichtung nach Anspruch 18, **dadurch gekennzeichnet, dass** der Aufnahmeraum (32) stirnseitig bezogen auf die Spulenachse (60) offen ist.

20. Datenträger-/Sendevorrichtung nach Anspruch 18 oder 19, **dadurch gekennzeichnet, dass** der Aufnahmeraum (32) quaderförmig ist.

21. Datenträger-/Sendevorrichtung nach einem der vorangehenden Ansprüche, **dadurch gekennzeichnet, dass** die elektrische Schaltungsanordnung (40; 94; 130) eine kapazitive Einrichtung umfasst.

22. Datenträger-/Sendevorrichtung nach einem der vorangehenden Ansprüche, **dadurch gekennzeichnet, dass** elektrische Schaltungsanordnung (40; 94; 130) durch einen oder mehrere integrierte Schaltkreise gebildet ist.

23. Datenträger-/Sendevorrichtung nach einem der vorangehenden Ansprüche, **dadurch gekennzeichnet, dass** der elektrischen Schaltungsanordnung (94) eine oder mehrere Abgleichkondensatoren zugeordnet sind.

24. Datenträger-/Sendevorrichtung nach einem der vorangehenden Ansprüche, **dadurch gekennzeichnet, dass** der mindestens einen Spule (38; 96; 120) ein Spulenkern (42; 92; 134) zugeordnet ist.

25. Datenträger-/Sendevorrichtung nach Anspruch 24, **dadurch gekennzeichnet, dass** der Spulenkern (42; 92; 134) mindestens näherungsweise quaderförmig ist.

26. Datenträger-/Sendevorrichtung nach Anspruch 24 oder 25, **dadurch gekennzeichnet, dass** die mindestens eine Spule (38; 96; 120) Windungen (50) aufweist, welche um den Spulenkern (42; 92; 130) angeordnet sind.

27. Datenträger-/Sendevorrichtung nach einem der vorangehenden Ansprüche, **dadurch gekennzeichnet, dass** Windungen (50) der mindestens einen Spule (38) Windungsbereiche (52, 54) aufweisen, welche mindestens näherungsweise parallel zu der Anlageseite (20) orientiert sind.

28. Datenträger-/Sendevorrichtung nach Anspruch 27, **dadurch gekennzeichnet, dass** mindestens 80 % der Gesamtwindungslänge der Spule (38; 96; 120) parallel zur Anlageseite (20) orientiert ist.

29. Datenträger-/Sendevorrichtung nach einem der Ansprüche 24 bis 28, **dadurch gekennzeichnet, dass** der Spulenkern (42; 92; 134) aus einem biegeflexiblen Material hergestellt ist.

30. Datenträger-/Sendevorrichtung nach einem der Ansprüche 24 bis 29, **dadurch gekennzeichnet, dass** der Spulenkern (32; 92; 134) aus einem Folienmaterial hergestellt ist.

31. Datenträger-/Sendevorrichtung nach einem der vorangehenden Ansprüche, **dadurch gekennzeichnet, dass** die mindestens eine Spule (38) mindestens teilweise über die Schaltungsanordnung (40) gewickelt ist.

32. Datenträger-/Sendevorrichtung nach einem der vorangehenden Ansprüche, **gekennzeichnet durch** einen Starrflex-Leiterplatten-Verbund (110).

33. Datenträger-/Sendevorrichtung nach Anspruch 32, **dadurch gekennzeichnet, dass** ein erstes Leiterplattenelement (112) vorgesehen ist, an dem Windungsbereiche (118) der mindestens einen Spule (120) angeordnet sind.

34. Datenträger-/Sendevorrichtung nach Anspruch 33, **dadurch gekennzeichnet, dass** ein zweites Leiterplattenelement (114) vorgesehen ist, an welchem Windungsbereiche (122) der mindestens einen Spule (120) angeordnet sind, wobei das zweite Leiterplattenelement (114) flexibel mit dem ersten Leiterplattenelement (112) verbunden ist.

35. Datenträger-/Sendevorrichtung nach Anspruch 34, **dadurch gekennzeichnet, dass** die Verbindung über Windungsbereiche (126) der mindestens einen Spule (120) erfolgt.

36. Datenträger-/Sendevorrichtung nach Anspruch 35, **dadurch gekennzeichnet, dass** ein drittes Leiterplattenelement (116) vorgesehen ist, an welchem Windungsbereiche (124) der mindestens einen Spule (120) angeordnet sind, wobei das dritte Leiterplattenelement (116) flexibel mit dem ersten Leiterplattenelement (112) verbunden ist.

37. Datenträger-/Sendevorrichtung nach Anspruch 36, **dadurch gekennzeichnet, dass** die Verbindung über Windungsbereiche (124) der mindestens einen Spule (120) erfolgt.

38. Datenträger-/Sendevorrichtung nach einem der Ansprüche 34 bis 37, **dadurch gekennzeichnet, dass** die Schaltungsanordnung (130) an dem zweiten Leiterplattenelement (114) angeordnet ist.

39. Datenträger-/Sendevorrichtung nach einem der Ansprüche 34 bis 38, **dadurch gekennzeichnet, dass** das zweite Leiterplattenelement (114) und/oder das dritte Leiterplattenelement (116) gegenüberliegend zu dem ersten Leiterplattenelement (112) angeordnet sind.

40. Datenträger-/Sendevorrichtung nach Anspruch 39, **dadurch gekennzeichnet, dass** ein Spulenkern (134) zwischen dem ersten Leiterplattenelement (112) und dem zweiten Leiterplattenelement (114) und/oder dem dritten Leiterplattenelement (116) angeordnet ist.

41. Datenträger-/Sendevorrichtung nach Anspruch 40, **dadurch gekennzeichnet, dass** das zweite Leiterplattenelement (114) und/oder das dritte Leiterplattenelement (116) an dem Spulenkern (134) anliegen.

42. Verwendung der Datenträger-/Sendevorrichtung gemäß einem der vorangehenden Ansprüche an einem metallischen Objekt.

43. Verfahren zur Herstellung einer Datenträger-/Sendevorrichtung mit einem Schwingkreis, bei dem ein Spulenanfang einer Spule an einer Schaltungsanordnung fixiert wird und die Schaltungsanordnung an einem Spulenkern fixiert wird.

44. Verfahren nach Anspruch 43, **dadurch gekennzeichnet, dass** die Spule an dem Spulenkern hergestellt wird.

45. Verfahren nach Anspruch 43 oder 44, **dadurch gekennzeichnet, dass** die Spule um den Spulenkern gewickelt wird.

46. Verfahren nach einem der Ansprüche 43 bis 45, **dadurch gekennzeichnet, dass** der Spulenkern in Folienform hergestellt wird.

47. Verfahren nach einem der Ansprüche 43 bis 46, **dadurch gekennzeichnet, dass** der Spulenkern quaderförmig ist.

48. Verfahren nach einem der Ansprüche 43 bis 47, **dadurch gekennzeichnet, dass** die Spule flach gewickelt wird.

49. Verfahren nach einem der Ansprüche 43 bis 48, **dadurch gekennzeichnet, dass** ein Spulenende an der Schaltungsanordnung fixiert wird.

50. Verfahren nach einem der Ansprüche 43 bis 49, **dadurch gekennzeichnet, dass** die Kombination aus Spulenkern und Spule und Schaltungsanordnung an einer Fixierungseinrichtung zur Fixierung der Datenträger-/Sendevorrichtung an einem Objekt fixiert wird.

51. Verfahren nach einem der Ansprüche 43 bis 50, **dadurch gekennzeichnet, dass** ein Metallelement an der Kombination von Spulenanordnung und Spule und Schaltungsanordnung positioniert ist oder wird.

52. Verfahren nach Anspruch 50 oder 51, **dadurch gekennzeichnet, dass** die Fixierungseinrichtung durch eine Metallplatte gebildet wird oder eine Metallplatte umfasst.

53. Verfahren nach einem der vorangehenden Ansprüche, **dadurch gekennzeichnet, dass** eine Abgleichseinrichtung hergestellt wird.

54. Verfahren nach Anspruch 53, **dadurch gekennzeichnet, dass** ein Abgleich an der hergestellten Datenträger-/Sendevorrichtung durchgeführt wird.

55. Verfahren nach einem der Ansprüche 43 bis 54, **dadurch gekennzeichnet, dass** ein erstes Leiterplattenelement und eine Teilspule hergestellt werden und mindestens ein weiteres Leiterplattenelement mit einer weiteren Teilspule hergestellt werden, wobei das erste Leiterplattenelement und das mindestens eine weitere Leiterplattenelement über Spulenbereiche flexibel miteinander verbunden werden.

56. Verfahren nach Anspruch 55, **dadurch gekennzeichnet, dass** der Spulenkern zwischen dem ersten Leiterplattenelement und dem mindestens einen weiteren Leiterplattenelement positioniert wird.
